# FASCICULE DE BREVET EUROPEEN

(11) **EP 2 166 696 B1**
(45) Date de publication et mention de la délivrance du brevet: **05.10.2016**
(21) Numéro de dépôt: 09168502.4
(22) Date de dépôt: 24.08.2009
(51) Int. Cl.: H04L 9/00, G09C 1/00

(54) **Protection de l'intégrité de données chiffrées en utilisant un état intermédiare de chiffrement pour générer une signature**
Schutzung von Integrität von Verschlüsseltete Daten unter Verwendung einem Zwischen Ziffern Status um ein Signature zu generieren
protection of encrypted data Integrity using an intermediate cipher state to generate a signature

(30) Priorité: 27.08.2008 FR 0855743
(43) Date de publication de la demande: 24.03.2010
(73) Titulaire: STMicroelectronics (Rousset) SAS, 13790 Rousset (FR)
(72) Inventeur: Martinez, Albert, 13320, BOUC BEL AIR (FR); Teglia, Yannick, 13011, MARSEILLE (FR)
(74) Mandataire: de Beaumont, Michel

(56) Documents cités:
- EP-A2- 1 387 519
- US-A1- 2003 233 559
- US-A1- 2008 095 360
- BRIAN ROGERS ET AL: "Using Address Independent Seed Encryption and Bonsai Merkle Trees to Make Secure Processors OS and Performance-Friendly" MICROARCHITECTURE, 2007. MICRO 2007. 40TH ANNUAL IEEE/ACM INTERNATIONAL SYMPOSIUM ON, IEEE, PISCATAWAY, NJ, USA, 1 décembre 2007 (2007-12-01), pages 183-196, XP031194141 ISBN: 978-0-7695-3047-5
- SUH G E ET AL: "Efficient memory integrity verification and encryption for secure processors" MICROARCHITECTURE, 2003. MICRO-36. PROCEEDINGS. 36TH ANNUAL IEEE/ACM I NTERNATIONAL SYMPOSIUM ON 3-5 DEC. 2003, PISCATAWAY, NJ, USA,IEEE, 3 décembre 2003 (2003-12-03), pages 339-350, XP010674685 ISBN: 978-0-7695-2043-8

## Description

### Domaine de l'invention

La présente invention concerne de façon générale les circuits électroniques et, plus particulièrement, le contrôle d'intégrité de données chiffrées.

L'invention s'applique plus particulièrement à la protection de la confidentialité et de l'intégrité (ou authenticité) du contenu d'une mémoire externe à un circuit intégré considéré comme sûr.

### Exposé de l'art antérieur

Des circuits électroniques manipulant des données considérées comme devant rester confidentielles (non directement accessibles par un utilisateur non autorisé) et intègres ou authentiques (non modifiables par un circuit non autorisé) contiennent généralement des éléments de mémorisation pour ces données dans une zone considérée comme sûre, c'est-à-dire de laquelle les signaux ne sont pas exploitables pour découvrir les données manipulées. Toutefois, pour des questions d'encombrement, les données manipulées ou les programmes sont généralement stockés dans des mémoires externes à la zone sécurisée, que cette mémoire soit intégrée ou non dans un même circuit que cette zone sécurisée.

Se contenter d'une protection des données par un chiffrement avant stockage dans la mémoire est souvent insuffisant. En particulier, ces données peuvent être alors sensibles à des attaques dites par répétition (replay attacks) qui interceptent les données chiffrées sur les bus de données entre la zone sécurisée et la mémoire pour renvoyer ces données légèrement modifiées et voir comment se comporte le processeur de traitement sécurisé. De telles attaques permettent, en effectuant plusieurs hypothèses successives, de percer le secret (clé secrète ou algorithme utilisé) des données manipulées.

Pour remédier à une telle vulnérabilité, on ajoute une information supplémentaire (Tag ou étiquette) aux données stockées en mémoire. Cette étiquette est un nombre aléatoire ajouté aux données avant chiffrement, et qui est stocké dans la mémoire externe avec le résultat du chiffrement.

L'utilisation d'étiquettes aléatoires complétant les données avant chiffrement prend de la place en mémoire. De plus, cela allonge le temps de traitement des données.

Le document EP1387519 décrit un procédé de vérification de l'intégrité de la fonction de calcul de chiffrement. Le principe selon ce document consiste à combiner le principe de sur-fonction afin de protéger les fonctions individuellement et d'appliquer une fonction de vérification. Celle-ci donne une empreinte du calcul. On peut alors réitérer une ou plusieurs fois tout ou partie du calcul afin de recalculer une nouvelle empreinte pour ensuite comparer ces empreintes afin de détecter d'éventuelles erreurs. La fonction de vérification effectue un calcul sur au moins un résultat intermédiaire provenant d'une opération du processus de calcul ou d'une sur-fonction. Un résultat intermédiaire est un résultat obtenu dans le cours de l'exécution d'un processus de calcul cryptographique, par opposition au résultat final.

Le document US-A-2003/233559 décrit un système de calcul de signature utilisant un algorithme de chiffrement. Le calcul de signature est de type CBC et prend en compte pour chaque bloc de données suivant, le résultat de l'algorithme de chiffrement et non un état intermédiaire de celui-ci.

Le document US-A-2008/0095360 décrit un calcul de signature utilisant un arbre de Merkle, sans faire état d'un prélèvement d'un état intermédiaire d'un algorithme de chiffrement pour calculer la signature.

### Résumé

Il serait souhaitable de pouvoir protéger la confidentialité et l'intégrité de données ou de programmes stockés dans une mémoire externe à un processeur de traitement, en requérant moins de place que les solutions usuelles.

Il serait également souhaitable de réduire les temps de traitement par rapport aux solutions connues.

Pour atteindre tout ou partie de ces objets ainsi que d'autres, il est prévu un procédé de protection d'intégrité de données chiffrées par un algorithme de chiffrement fournissant au moins un état intermédiaire censé être identique en chiffrement et en déchiffrement, cet état intermédiaire étant prélevé au cours du chiffrement pour générer une signature, fournie en plus des données chiffrées.

Selon un mode de réalisation de la présente invention, la signature est stockée, avec les données chiffrées, dans une mémoire externe à un processeur exécutant l'algorithme de chiffrement.

Selon un mode de réalisation de la présente invention, plusieurs signatures sont regroupées pour être soumises à un chiffrement, avant d'être stockées dans la mémoire externe.

Selon un mode de réalisation de la présente invention, plusieurs signatures sont combinées à une partie des données à chiffrer, avant d'être stockées avec les données chiffrées en mémoire.

Selon un mode de réalisation de la présente invention, l'algorithme de chiffrement comporte plusieurs itérations successives, l'état intermédiaire étant prélevé à l'issue d'une des itérations à l'exception de la dernière.

Selon un mode de réalisation de la présente invention, l'algorithme de chiffrement est un algorithme symétrique, de préférence de type AES.

Selon un mode de réalisation de la présente invention, l'état intermédiaire correspond à un état fourni par l'algorithme entre les quatrième et neuvième itérations.

Selon un mode de réalisation de la présente invention, la signature est calculée par une combinaison de type OU-Exclusif de parties du résultat intermédiaire.

Selon un mode de réalisation de la présente invention, l'algorithme de chiffrement est un algorithme asymétrique, de préférence de type RSA.

Il est également prévu un procédé d'enregistrement de données en mémoire, dans lequel les données sont soumises à un algorithme de chiffrement et à un calcul de signature.

Il est également prévu un procédé de lecture de données stockées en mémoire, dans lequel les données chiffrées sont soumises à l'algorithme de déchiffrement, un état intermédiaire étant prélevé au cours du déchiffrement pour vérification de la signature.

Il est également prévu un système électronique comportant une unité de traitement et une mémoire externe à cette unité de traitement dans laquelle des données doivent être stockées sous forme chiffrée, comportant des moyens pour la mise en oeuvre du procédé d'enregistrement et du procédé de lecture.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est un schéma-blocs d'un système électronique du type auquel s'applique à titre d'exemple la présente invention ;
la figure 2 est un schéma-blocs fonctionnel d'un processus usuel de protection en confidentialité et en intégrité ;
la figure 3 illustre le fonctionnement du processus de la figure 2 appliqué à un algorithme AES ;
la figure 4 est un schéma-blocs illustrant un mode de mise en oeuvre d'un procédé de protection de données en confidentialité et en intégrité ;
la figure 5 est un schéma-blocs illustrant un autre mode de mise en oeuvre d'un procédé de protection de données en confidentialité et en intégrité ;
la figure 6 représente un exemple d'arborescence de traitement de signatures selon un mode de réalisation de la présente invention ;
la figure 7 est un organigramme simplifié d'un mode de réalisation d'un procédé de chiffrement mettant en oeuvre un algorithme de type AES et un calcul de signature ;
la figure 8A illustre un mode de réalisation d'une étape faisant suite aux étapes de la figure 7 ;
la figure 8B illustre un autre mode de réalisation d'une étape faisant suite aux étapes de la figure 7 ;
la figure 9A illustre le fonctionnement du processus de la figure 7 dans la mise en oeuvre de la figure 8A ;
la figure 9B illustre le fonctionnement du processus de la figure 7 dans la mise en oeuvre de la figure 8B ;
la figure 10 est un organigramme simplifié d'un mode de réalisation d'un procédé de déchiffrement mettant en oeuvre un algorithme de type AES ;
les figures 11A, 11B et 11C illustrent trois exemples de vérification d'une signature obtenue par le procédé de la figure 10 ;
la figure 12 est un organigramme simplifié d'un mode de réalisation d'un procédé de chiffrement mettant en oeuvre un algorithme de type RSA et un calcul de signature ; et
la figure 13 est un organigramme simplifié d'un mode de réalisation d'un procédé de déchiffrement mettant en oeuvre un algorithme de type RSA et une vérification de signature.

De mêmes éléments ont été désignés par de mêmes références aux différentes figures.

### Description détaillée

Pour des raisons de clarté, seuls les éléments et étapes utiles à la compréhension de l'invention ont été représentés et seront décrits. En particulier, les détails des étapes des algorithmes de chiffrement ainsi que les détails de processus de calcul de signature n'ont pas été exposés, l'invention étant compatible avec les techniques usuelles. De plus, la destination des données ou programmes traités par les mécanismes de protection en confidentialité et en intégrité n'a pas non plus été détaillée, l'invention étant là encore compatible avec les exploitations usuelles de telles données et programmes.

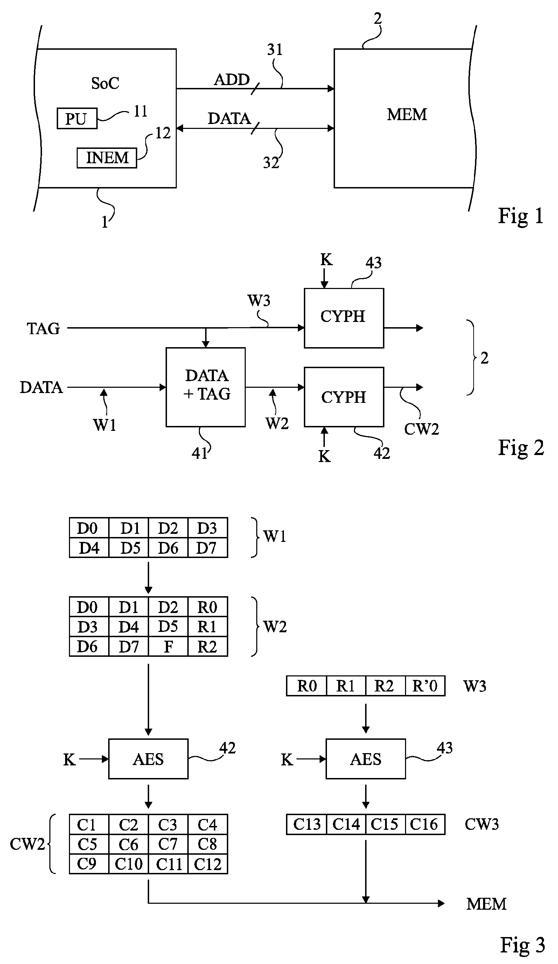

La figure 1 est un schéma-blocs simplifié d'un système du type auquel s'applique à titre d'exemple la présente invention. Un système réalisé sous forme d'un circuit intégré 1 (SoC), généralement désigné par la dénomination anglo-saxonne System-on-Chip, est susceptible de communiquer avec une mémoire externe 2 (MEM), par exemple, par l'intermédiaire d'un bus 31 d'adresses ADD et un bus 32 de données DATA auxquels s'ajoute généralement un bus de commande (non représenté). Le circuit 1 est considéré comme sûr du point de vue de la confidentialité et de l'intégrité des données qu'il manipule. Le système comporte généralement de nombreux circuits parmi lesquels au moins une unité de traitement 11 (PU) et au moins un élément de mémorisation interne 12 (IMEM). La mémoire 2 est destinée à contenir tout ou partie de programmes applicatifs exécutés par le circuit 1 et/ou des données manipulées par ce circuit. On fera par la suite référence au terme "données" pour désigner indifféremment des instructions de programme et des données proprement dites.

À titre d'exemple de réalisation, le circuit 1 est un processeur de traitement numérique de contenus multimédia dans un système de télévision à péage ou de lecture contrôlée de données multimédia. Le circuit 1 peut être contenu dans une carte à puce ou analogue.

Selon un autre exemple, le circuit 1 est un processeur de chiffrement d'une clé USB sécurisée ou le SoC d'un téléphone portable.

La figure 2 illustre, sous forme de blocs, un exemple de processus usuel visant à protéger la confidentialité et l'intégrité de données transitant entre le circuit 1 et la mémoire 2.

La figure 3 illustre un exemple de traitement opéré par le processus de la figure 2 avec un algorithme de chiffrement de type AES.

Des données à traiter DATA sont, par exemple, découpées en ensembles W1 constitués de huit mots D0 à D7 de 32 bits chacun (figure 3). Une première étape (bloc 41, DATA + TAG) consiste à associer une étiquette TAG ou un marqueur à ces données. Typiquement, les étiquettes R0, R1 et R2 sont des nombres aléatoires sur 32 bits qui sont associés aux huit mots de données D0 à D7 pour former un ensemble W2 de trois mots de 128 bits. Un des mots de 32 bits du mot W2 doit faire l'objet d'un remplissage quelconque F pour obtenir trois mots de 128 bits comportant chacun une des étiquettes R0 à R2 sur 32 bits. Les mots de l'ensemble W2 sont alors soumis (bloc 42, CYPH - figure 2, ou AES - figure 3) à un processus de chiffrement, par exemple de type AES, avec une clé K qui fournit un ensemble chiffré CW2 de trois mots de 128 bits comprenant chacun des mots de 32 bits C1 à C12. Parallèlement, les étiquettes R0 à R2 sont associées à une étiquette supplémentaire R'0 (aléatoire) pour former un mot W3 de 128 bits. Ce mot W3 est soumis (bloc 43, CYPH - figure 2, ou AES - figure 3) au même algorithme de chiffrement avec la clé K pour obtenir un mot CW3 de 128 bits comportant quatre mots C13 à C16 de 32 bits. Les seize mots de 32 bits (ensembles CW2 et CW3) résultant du chiffrement sont stockés dans la mémoire externe 2. Ainsi, 128 bits d'étiquette sont requis pour protéger 256 bits de données et 512 bits sont requis en mémoire pour stocker le résultat du chiffrement et les étiquettes. De plus, l'adjonction des mots R0, R1, R2 et F engendre un décalage dans la mémoire et requiert donc une gestion d'adresses particulière lorsque l'unité de traitement 1 souhaite aller chercher des données en mémoire.

Il serait souhaitable de simplifier le processus et notamment le volume de données stockées en mémoire sans pour autant nuire à la sécurité en termes de confidentialité et d'intégrité des données.

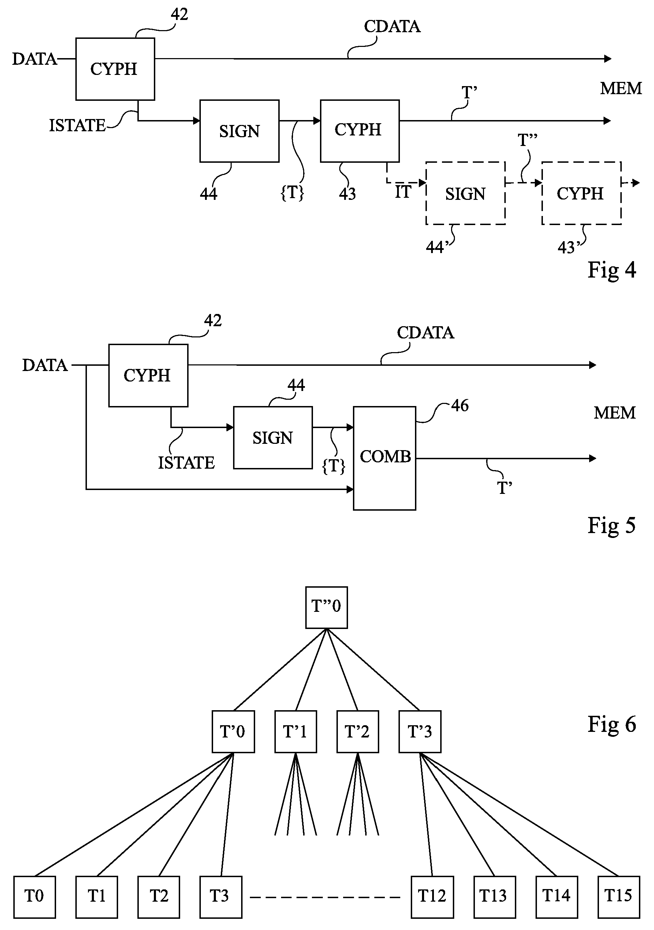

La figure 4 est un schéma-blocs illustrant un processus de protection de confidentialité et d'intégrité de données. Ce schéma est à rapprocher de celui de la figure 2 décrite précédemment.

Des données DATA à stocker en mémoire sont soumises à un algorithme de chiffrement (bloc 42, CYPH) de façon à les protéger du point de vue de la confidentialité. Le résultat (CDATA) est destiné à être directement stocké dans la mémoire MEM (2, figure 1) externe au circuit de traitement. Des états intermédiaires de l'algorithme de chiffrement exécuté (ISTATE) sont prélevés au cours de l'exécution de cet algorithme et sont soumis à un calcul de signature (bloc 44, SIGN), par exemple de type MAC (Message Authentication Code). Chaque signature a une taille (par exemple, 32 bits) inférieure à celle du mot (par exemple 128 bits) dont elle résulte. Le résultat signé constitue une étiquette T de protection contre un défaut d'intégrité du mot correspondant. Dans l'exemple de la figure 4, plusieurs signatures T sont regroupées en un ensemble {T} pour être soumises à l'algorithme de chiffrement (bloc 43, CYPH) et le résultat T' de ce chiffrement est stocké en mémoire. De préférence (pointillés en figure 4), le chiffrement 43 des signatures est soumis au même processus d'extraction d'un état intermédiaire IT à destination d'un calcul de signature 44' suivi, le cas échéant, d'un algorithme de chiffrement 43'. Cela sert à construire un arbre de signatures dont la racine est stockée dans le circuit intégré 1.

La figure 5 est un schéma-blocs d'un autre mode de réalisation dans lequel le chiffrement (43, figure 4) de l'ensemble {T} de signatures fournies par le bloc 44 est remplacé par une combinaison 46 (COMB) de ces signatures avec une partie des données non chiffrées DATA. Le résultat T' de la combinaison est stocké en mémoire externe MEM avec les données chiffrées CDATA.

La figure 6 illustre schématiquement un exemple d'arbre de signatures utilisé pour la vérification d'intégrité dans le processus de la figure 4. Les signatures respectives T0 à T15 des mots de données soumis à l'algorithme de chiffrement 42 (avec la granularité des mots adaptée à l'algorithme) font l'objet, pendant l'opération de chiffrement d'un ensemble {T} de signatures (par exemple, respectivement T0 à T3, T4 à T7, T8 à T11 et T12 à T15), d'une extraction d'un état intermédiaire IT pour générer une signature intermédiaire, respectivement T'0, T'1, T'2 et T'3. Les signatures intermédiaires sont regroupées et chiffrées pour générer une signature de base T"0 qui est d'une taille suffisamment petite pour être stockée, de préférence, dans la mémoire interne (12, figure 1) du circuit de traitement 1. Cela permet de s'assurer de l'intégrité des signatures lors d'une lecture depuis la mémoire. Les signatures intermédiaires T'0 à T'3 ne sont pas nécessairement conservées une fois la racine T"0 calculée. Leur stockage en mémoire externe permet cependant de gagner du temps en évitant de recalculer toutes les signatures pour vérification.

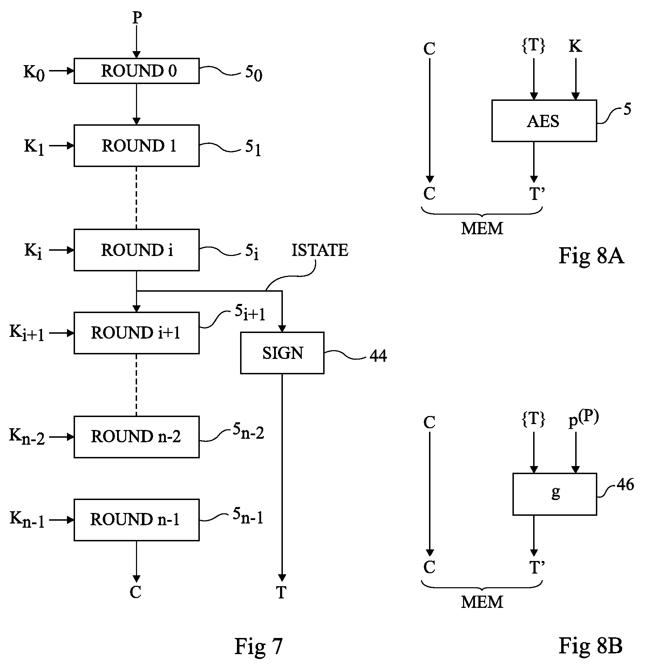

La figure 7 est un organigramme simplifié d'une exécution d'un algorithme (par exemple de type AES) exécutant des itérations (tours ou rounds) de mêmes étapes de chiffrement en exploitant le résultat de l'étape précédente et une clé (sous-clé) différente. Un texte à chiffrer P (plain text) soumis à l'algorithme AES est d'abord soumis à un premier tour (bloc 51, ROUND 0) en utilisant une première sous-clé K₀. Le résultat intermédiaire est soumis au tour suivant de chiffrement (bloc 52, ROUND 1) avec une sous-clé K₁ et ainsi de suite bloc 5ᵢ, bloc 5ᵢ₊₁, bloc 5ₙ₋₂, bloc 5ₙ₋₁ jusqu'à un dernier tour n-1 dont le résultat fournit le texte chiffré C (ciphered text).

Un résultat intermédiaire ISTATE est prélevé entre deux tours de chiffrement (dans l'exemple, entre les tours de rang i et i+1) et est soumis à un calcul de signature (bloc 44, SIGN) dont le résultat fournit la signature T. La taille de la signature T est inférieure à la taille de l'état intermédiaire ISTATE.

Les figures 8A et 8B illustrent deux exploitations possibles de la signature et du texte chiffré, correspondant respectivement aux modes de réalisation des figures 4 et 5.

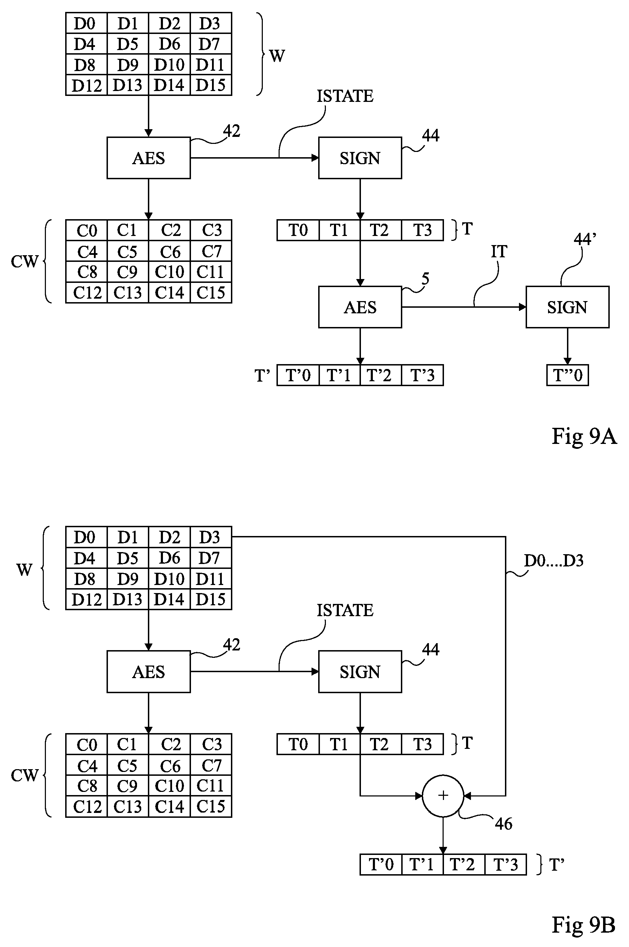

Les figures 9A et 9B sont des représentations illustrant respectivement le fonctionnement des algorithmes des figures 8A et 8B. Ces figures sont à rapprocher de la figure 3.

Dans l'exemple de la figure 8A, les signatures T obtenues à partir des états intermédiaires pour plusieurs mots de données sont regroupées, en respectant la granularité de l'algorithme de chiffrement utilisé - par exemple, quatre mots de 32 bits, pour obtenir un ensemble ou mot {T} de signatures. Cet ensemble {T} est soumis au chiffrement (par exemple AES, bloc 5) en appliquant, par exemple, la même clé que celle ayant servie au chiffrement des données. On obtient une signature chiffrée T' qui est, par exemple, stockée dans la mémoire MEM avec le texte chiffré C.

Comme l'illustre la figure 9A, les données à chiffrer sont, par exemple, présentées sous la forme de mots de 32 bits D0 à D15 regroupés (ensemble W) en quatre mots de 128 bits pour être traités par l'algorithme et obtenir un groupe CW de mots chiffrés comportant chacun quatre mots de 32 bits C0 à C15. En fait, chaque mot W de 512 bits est traité en mots de 128 bits par l'algorithme AES (bloc 42) et un état intermédiaire ISTATE de 128 bits est prélevé pour chacun de ces mots de 128 bits. Chaque état intermédiaire est soumis à un calcul de signature 44 qui résulte en un mot de 32 bits, respectivement T0 à T3. Les quatre mots de 32 bits sont alors soumis (ensemble T) à l'algorithme AES (bloc 5), ce qui fournit un ensemble ou mot T' de signatures chiffrées T'0 à T'3. Un état intermédiaire IT (figure 4) est de préférence prélevé de l'exécution du bloc 5 pour être soumis au calcul de signature 44' résultant en un mot T"0 de 32 bits. Ces calculs intermédiaires sont de préférence poursuivis jusqu'à l'obtention d'un mot représentant une racine d'un arbre de signatures. A chaque regroupement de signatures pour monter d'un niveau dans l'arbre, l'ensemble de signatures regroupées est de préférence chiffré (blocs 43, 43', figure 4).

Dans l'exemple de la figure 8B, l'ensemble {T} de signatures est combiné par une fonction g (bloc 46) avec une partie des données d'origine p(P) pour fournir la signature T'.

Comme l'illustre la figure 9B, cela se traduit par une combinaison (par exemple, une addition bit à bit 46) des mots T0 à T3 avec une partie de même taille (par exemple, le premier mot D0-D3 de 128 bits des données à traiter).

La fonction g utilisée pour combiner la signature avec une partie des données d'origine doit respecter la propriété que combiner un opérande avec le résultat fournit l'autre opérande. En d'autres termes, en notant x et y les deux opérandes et z le résultat (z=g(x, y)), la fonction g doit être commutative (z=g(y, x)) et respecter :
x=g(z,y)=g(y,z) ; et
y=g(z,x)=g(x, z).

Ces propriétés correspondent à celles de la fonction OU-Exclusif (XOR) qui constitue un mode de réalisation particulièrement simple et préféré.

Le fait de remplacer une étiquette aléatoire (figures 2 et 3) par un résultat intermédiaire de l'algorithme de chiffrement soumis à un mécanisme de signature réduit la place nécessaire en mémoire pour le stockage. Par exemple, seize mots de données de 32 bits constituant le flux de données initial peuvent être stockés avec des signatures chiffrées sur 128 bits (quatre mots de 32 bits respectivement affectés par groupe de quatre mots aux données). Par conséquent, cinq mots de 128 bits (quatre mots de données, un mot de signatures) suffisent alors qu'il faut huit mots de 128 bits (quatre mots de données, quatre mots de signatures) avec la solution de la figure 3.

Le choix de l'itération de l'algorithme de chiffrement à partir de laquelle l'état intermédiaire est prélevé dépend du type d'algorithme utilisé. On cherche généralement à bénéficier de l'effet de diffusion de l'algorithme. Dans l'exemple de l'AES, un tel prélèvement d'état intermédiaire peut intervenir à partir de la quatrième itération. L'état intermédiaire est prélevé avant le dernier tour de l'algorithme, c'est-à-dire que l'état soumis au calcul de signature ne correspond pas au texte chiffré obtenu. Cela garantit l'imbrication du calcul de signature et du chiffrement, et améliore la sécurité en termes de confidentialité et d'intégrité.

Le fait que l'étiquette ou signature dépende de la donnée (état intermédiaire) simplifie le stockage. En particulier, il n'est pas nécessaire d'imbriquer la signature aux données avant chiffrement. Les données chiffrées peuvent donc être stockées de façon simple. Quand elle est stockée à l'extérieur du circuit 1, elle est préférentiellement également soumise au même chiffrement. En variante, si la capacité de la mémoire du circuit 1 est suffisante, les signatures calculées (non nécessairement chiffrées) pourront être stockées dans celui-ci.

Par ailleurs, en combinant le calcul de signature et le chiffrement, l'exécution de l'algorithme de chiffrement se trouve protégée à partir de l'itération dont on prélève le résultat intermédiaire. Par conséquent, grâce aux signatures, on est en mesure de détecter indirectement une attaque sur l'intégrité des données.

Dans le mode de réalisation de la figure 8B, le fait de prendre en compte une information du texte d'origine permet de protéger l'exécution de l'algorithme dès le départ alors qu'il n'est sinon protégé qu'à partir du tour i+1.

De préférence, le calcul de signature est une combinaison de type OU-Exclusif de parties (par exemple de 32 bits) du mot constituant l'état intermédiaire (par exemple de 128 bits). Cela réalise un calcul simple et suffisamment efficace.

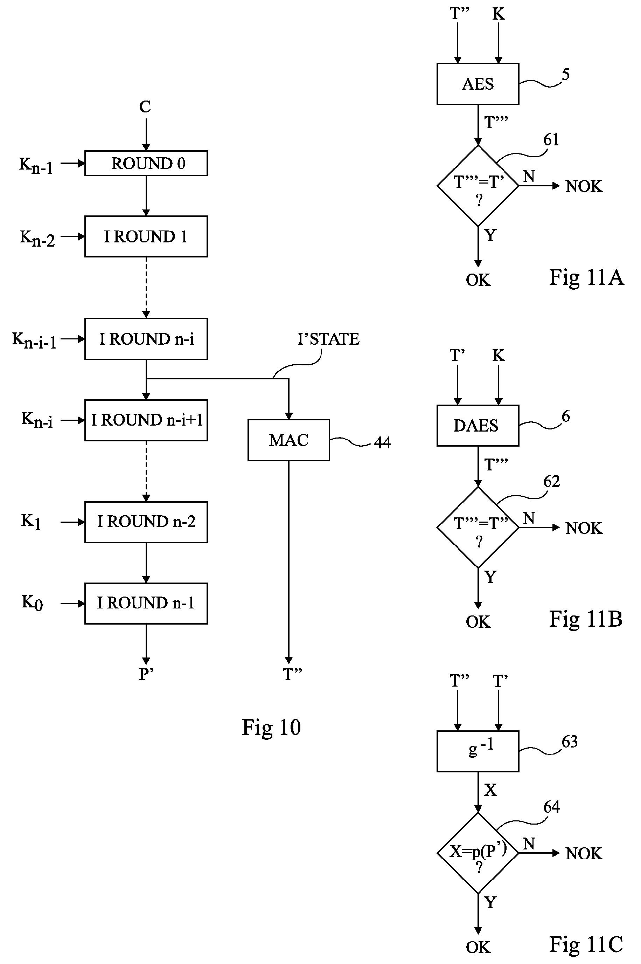

La figure 10 est un organigramme à rapprocher de celui de la figure 7 illustrant le déchiffrement d'une donnée extraite de la mémoire. Ce déchiffrement consiste à appliquer, à un texte chiffré C, les itérations de l'algorithme dans un ordre inverse pour obtenir un texte déchiffré P'. Selon l'algorithme utilisé, ces itérations correspondent à des opérations inverses IROUND à celles de l'algorithme de chiffrement ou aux mêmes opérations. Généralement, les clés K₀ à Kₙ₋₁ sont également utilisées dans un ordre inverse. Entre les itérations n-i et n-i+1, un résultat intermédiaire I'STATE est prélevé et soumis au même calcul de signature (bloc 44, MAC) que lors du chiffrement pour obtenir une signature T". Le choix de l'itération (n-1) après laquelle est prélevé l'état intermédiaire lors du déchiffrement dépend de l'itération (i) après laquelle il a été prélevé lors du chiffrement. Cela doit respecter le fait que l'état intermédiaire obtenu au déchiffrement est, si l'intégrité des données a été respectée, identique à l'état prélevé lors du chiffrement.

Le cas échéant, on peut rendre variable (aléatoire, séquentiel, à chaque exécution, périodiquement, etc.) l'itération à laquelle est prélevé l'état intermédiaire, pourvu d'être en mesure de retrouver l'état intermédiaire correspondant lors du déchiffrement. Cela requiert donc de mémoriser une information permettant de retrouver l'itération.

Les figures 11A, 11B et 11C illustrent trois modes de vérification possibles de la signature.

La figure 11A correspond à un premier exemple d'application lié à la solution de la figure 8A dans laquelle la signature T" est soumise à un chiffrement par le même algorithme (bloc 5, AES) avec la clé K pour obtenir une signature T"' qui et comparée (bloc 61, T"'=T' ?) à la signature T' stockée avec les données. Le résultat de ce test valide (OK - sortie Y du bloc 61) ou invalide (NOK - sortie N du bloc 61) le déchiffrement en termes d'intégrité des données.

La figure 11B illustre un deuxième exemple appliqué à un chiffrement du type de celui de la figure 8A dans lequel la signature T' mémorisée est soumise à un chiffrement inverse (bloc 6, DAES) pour obtenir une signature déchiffrée T"' qui est comparée (bloc 62, T"'=T" ?) à la signature T" obtenue lors du déchiffrement des données chiffrées. Le résultat OK/NOK de la comparaison fournit le résultat de l'intégrité des données.

La figure 11C illustre un déchiffrement dans le cas d'un chiffrement opéré selon la figure 11B. La signature T" obtenue par le déchiffrement des données est combinée avec la signature T' mémorisée par une fonction inverse g⁻¹ (bloc 63). Le résultat X obtenu est comparé (bloc 64, X=p(P') ? ) à la partie p(P') des données P' obtenues par le déchiffrement qui est sélectionnée pour correspondre à celle prise en compte au chiffrement (par exemple, les quatre premiers mots de 32 bits D0 à D3 des données déchiffrées). Le résultat OK/NOK de cette comparaison fournit le résultat de la vérification.

Des exemples de mise en oeuvre de l'algorithme AES, avec ou sans masquage par nombres aléatoires, auxquels peuvent s'appliquer les modes de réalisation décrits ci-dessus, sont exposés dans le brevet américain n°7,403,620 (02-RO-148, B5532) et dans la demande internationale WO-A-107138 (02-RO-451, B5581). Pour une mise en oeuvre avec un nombre aléatoire introduit dans l'algorithme de chiffrement, on veillera à démasquer l'état intermédiaire pour le calcul de signature.

La mise en oeuvre des modes de réalisation décrits pourra être effectuée avec n'importe quelle taille d'algorithme AES (128, 192, 256 bits).

La mise en oeuvre ne requiert aucun circuit supplémentaire pour la génération des signatures. En particulier, aucun circuit de génération de nombre aléatoire n'est requis pour cette fonction de protection.

La vérification de signature peut être effectuée en parallèle avant la fin du déchiffrement (dès le prélèvement de l'état intermédiaire). Par conséquent, la vérification d'intégrité (ou d'authenticité) en est plus rapide.

Bien que l'invention ait été plus particulièrement décrite avec l'algorithme AES, on pourra utiliser n'importe quel algorithme de chiffrement symétrique dont un état intermédiaire est commun en chiffrement et en déchiffrement.

Par ailleurs, on pourra utiliser n'importe quel algorithme de chiffrement asymétrique respectant la propriété d'avoir un même état intermédiaire pour le chiffrement et le déchiffrement. Par exemple, on pourra mettre en oeuvre un algorithme de type RSA.

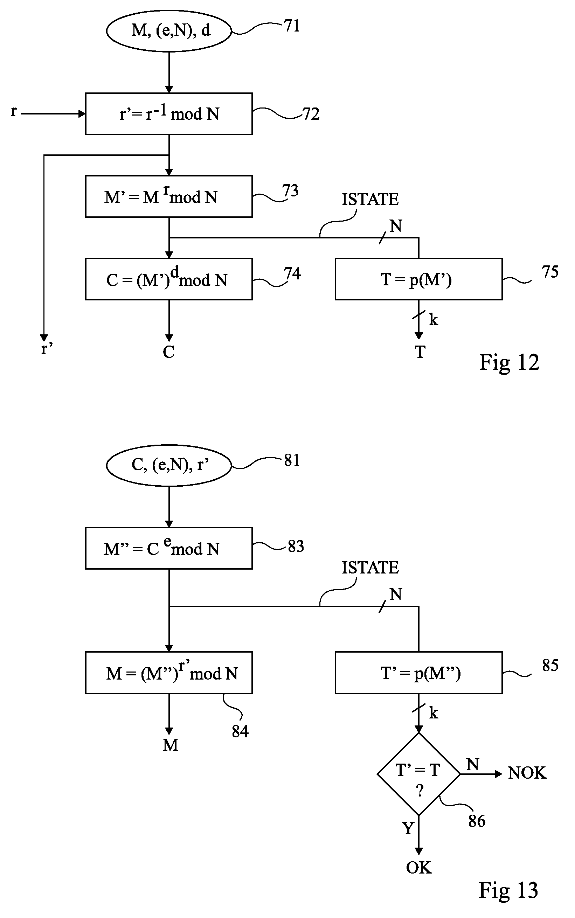

La figure 12 est un organigramme simplifié d'un mode de réalisation d'un chiffrement et calcul de signature utilisant l'algorithme RSA.

Un message M à chiffrer (bloc 71) en utilisant une clé publique (e, N) et une clé privée (d) de l'algorithme RSA est introduit dans le circuit de traitement, N représentant le modulo des opérations (par exemple, 1024 bits).

Le circuit 1 commence (bloc 72) par prendre un nombre r généré aléatoirement (par exemple, sur 32 bits) et par calculer r' = r⁻¹ mod N.

Puis, le circuit 1 calcule (bloc 73) une valeur M' = M^{r} mod N, qui représente l'état intermédiaire utilisé pour le calcul de signature.

Le chiffrement se poursuit (bloc 74) avec la valeur M' en calculant (M')^{d} mod N qui fournit le message chiffré C (qui vaut également (M^{r})^{d} mod N ou M^{rd} mod N).

Côté calcul de signature, le circuit 1 prélève par exemple une partie p(M') de l'état intermédiaire pour former la signature T. Par exemple, on prélève k bits (par exemple 32 bits) des N bits de la valeur M'.

En variante, on peut prévoir une combinaison de plusieurs états intermédiaires obtenus successivement pour plusieurs messages M, d'une façon similaire à celle illustrée en relation avec l'algorithme AES, ainsi qu'un chiffrement des signatures.

Les valeurs C, r' et T sont stockées en mémoire externe 2.

La figure 13 est un organigramme simplifié d'un mode de réalisation du déchiffrement et vérification de signature utilisant l'algorithme RSA.

On part (bloc 81) des valeurs C et r' stockées en mémoire 2 et de la clé publique (e, N) qui est, par exemple, contenue dans l'élément de mémorisation 12 du circuit 1.

Le circuit 1 calcule (bloc 83) une valeur M" = C^{e} mod N (qui est égal à (M^{rd})^{e} mod N ou à M^{r} mod N), qui représente l'état intermédiaire ISTATE.

Puis, le circuit 1 calcule (bloc 84) le message déchiffré M en calculant (M")^{r'} mod N.

Côté vérification de signature, l'état intermédiaire ISTATE subit la même extraction d'une partie sur k bits (bloc 85, T'=p(M")) que lors du chiffrement. La valeur T' obtenue est enfin comparée à la signature T (bloc 86, T'=T ?) pour valider ou non l'intégrité du message.

Dans l'exemple d'un chiffrement asymétrique, le nombre aléatoire utilisé pour le chiffrement n'a pas besoin d'être secret pour garantir l'intégrité.

Différents modes de réalisation ont été décrits. Différentes variantes et modifications apparaîtront à l'homme de l'art. En particulier, bien que l'invention ait été plus particulièrement décrite en relation avec des algorithmes AES et RSA, elle s'applique plus généralement à tout algorithme symétrique ou asymétrique respectant les propriétés indiquées. De plus, la mise en oeuvre pratique de l'invention à partir des indications fonctionnelles données ci-dessus est à la portée de l'homme du métier. Les éléments illustrés par des blocs (notamment 42 à 44, 43', 44', 46, 5, 6, 61 à 64, 72 à 75, 82 à 86) aux figures peuvent correspondre à des circuits de traitement matériels dédiés (machine d'états en logique câblée, réseau de portes programmable - FPGA) ou à des fonctions logicielles.

## Revendications

1. Procédé de protection d'intégrité de données chiffrées (CDATA, C) par un algorithme de chiffrement four-nissant au moins un état intermédiaire censé être identique en chiffrement et en déchiffrement, **caractérisé en ce que** :
cet état intermédiaire (ISTATE) est prélevé au cours du chiffrement pour générer une signature (T), fournie en plus des données chiffrées ; et
lors du déchiffrement des données, un état intermédiaire est prélevé au cours du déchiffrement pour vérification de la signature.

2. Procédé selon la revendication 1, dans lequel la signature est stockée, avec les données chiffrées, dans une mémoire (2) externe à un processeur (1) exécutant l'algorithme de chiffrement.

3. Procédé selon la revendication 2, dans lequel plusieurs signatures ({T}) sont regroupées pour être soumises à un chiffrement (43), avant d'être stockées dans la mémoire externe (2).

4. Procédé selon la revendication 2, dans lequel plusieurs signatures sont combinées à une partie des données à chiffrer, avant d'être stockées avec les données chiffrées en mémoire (2).

5. Procédé selon l'une quelconque des revendications 1 à 4, dans lequel l'algorithme de chiffrement comporte plusieurs itérations successives (ROUND), l'état intermédiaire étant pré-levé à l'issue d'une (i) des itérations à l'exception de la dernière.

6. Procédé selon l'une quelconque des revendications 1 à 5, dans lequel la signature est calculée par une combinaison de type OU-Exclusif de parties du résultat intermédiaire (ISTATE).

7. Procédé selon la revendication 5 ou 6 dans leur rattachement à la revendication 1, dans lequel l'algorithme de chiffrement est un algorithme symétrique, de préférence de type AES.

8. Procédé selon la revendication 7, dans lequel l'état intermédiaire (ISTATE) correspond à un état fourni par l'algorithme entre les quatrième et neuvième itérations.

9. Procédé d'enregistrement de données en mémoire, **caractérisé en ce que** les données sont soumises à un algorithme de chiffrement et à un calcul de signature conformément au procédé selon l'une quelconque des revendications 1 à 8.

10. Procédé de lecture de données stockées en mémoire conformément au procédé selon la revendication 8, dans lequel les données chiffrées sont soumises à l'algorithme de déchiffrement, un état intermédiaire étant prélevé au cours du déchiffrement pour vérification de la signature.

11. Système électronique comportant une unité de traitement (1) et une mémoire (2) externe à cette unité de traitement dans laquelle des données doivent être stockées sous forme chiffrée, **caractérisé en ce qu'**il comporte des moyens pour la mise en oeuvre du procédé conforme à l'une quelconque des revendications précédentes.

## Patentansprüche

1. Ein Verfahren zum Schützen der Integrität von chiffrierten Daten (CDATA, C) durch einen Chiffrier Algorithmus, der wenigstens einen Zwischenzustand bereitstellt, von dem angenommen wird, dass er chiffriert und de-chiffriert identisch ist, **dadurch gekennzeichnet, dass** dieser Zwischenzustand (ISTATE) während der Chiffrierung gesampelt wird, um eine Signatur (T) zu erzeugen, die zusätzlich zu den chiffrierten Daten bereitgestellt wird; und wenn die Daten de-chiffriert werden, wird ein Zwischenzustand während des De-chiffrierens gesampelt, um die Signatur zu verifizieren.

2. Das Verfahren nach Anspruch 1, wobei die Signatur zusammen mit den chiffrierten Daten in einem Speicher (2) gespeichert wird, der extern zu einem Prozessor (1) ist, der den Chiffrier Algorithmus ausführt.

3. Das Verfahren nach Anspruch 2, wobei mehrere Signaturen ({T}) gesammelt werden, um an einen Chiffrierer (43) gesendet zu werden, bevor diese in dem externen Speicher (2) gespeichert werden.

4. Das Verfahren nach Anspruch 2, wobei mehrere Signaturen mit einem Teil der zu chiffrierenden Daten kombiniert werden, bevor diese zusammen mit den chiffrierten Daten in dem Speicher (2) gespeichert werden.

5. Das Verfahren nach einem der Ansprüche 1 bis 4, wobei der Chiffrier Algorithmus mehrere aufeinanderfolgende Iterationen (ROUND) aufweist, wobei der Zwischenzustand am Ende von einer (i) der Iterationen gesampelt wird, mit Ausnahme der letzten Iteration.

6. Das Verfahren nach einem der Ansprüche 1 bis 5, wobei die Signatur durch eine XOR-Typ Kombination von Teilen des Zwischenergebnisses (ISTATE) berechnet wird.

7. Das Verfahren nach Anspruch 5 oder 6 in Abhängigkeit von Anspruch 1, wobei der Chiffrier Algorithmus ein symmetrischer Algorithmus ist, vorzugsweise von einem AES Typ.

8. Das Verfahren nach Anspruch 7, wobei der Zwischenzustand (ISTATE) einem Zustand entspricht, der von dem Algorithmus zwischen der vierten und neunten Iteration bereitgestellt wird.

9. Ein Verfahren zum Aufzeichnen von Daten in einem Speicher, wobei die Daten an den Chiffrier Algorithmus und zu einer Signaturberechnung gesendet werden, entsprechend dem Verfahren nach einem der Ansprüche 1 bis 8.

10. Ein Verfahren zum Lesen von Daten, die in einem Speicher gespeichert sind, entsprechend dem Verfahren nach Anspruch 8, wobei die chiffrierten Daten an den de-chiffrier Algorithmus gesendet werden, wobei ein Zwischenzustand während des De-chiffrierens gesampelt wird, um die Signatur zu verifizieren.

11. Ein elektronisches System, wobei das elektronische System eine Prozessoreinheit (1) und einen Speicher (2) aufweist, der extern zu der Prozessoreinheit ist, in dem Daten in chiffrierter Form gespeichert werden müssen, wobei das elektronische System Mittel zum Implementieren des Verfahrens nach einem der vorhergehenden Ansprüche aufweist.

## Claims

1. A method for protecting the integrity of data ciphered (CDATA, C) by a ciphering algorithm providing at least one intermediary state meant to be identical in ciphering and deciphering, **characterized in that** is this intermediary state (ISTATE) is sampled during the ciphering to generate a signature (T), which is provided in addition to the ciphered data; and when deciphering the data, an intermediate state is sampled during the deciphering to verify the signature.

2. The method of claim 1, wherein the signature is stored, together with the ciphered data, in a memory (2) external to a processor (1) executing the ciphering algorithm.

3. The method of claim 2, wherein several signatures ({T}) are gathered to be submitted to a ciphering (43), before being stored in the external memory (2).

4. The method of claim 2, wherein several signatures are combined with part of the data to be ciphered, before being stored together with the ciphered data in the memory (2).

5. The method of any of claims 1 to 4, wherein the ciphering algorithm comprises several successive iterations (ROUND), the intermediary state being sampled at the end of one (i) of the iterations except for the last one.

6. The method of any of claims 1 to 5, wherein the signature is calculated by an XOR-type combination of portions of the intermediary result (ISTATE).

7. The method of claim 5 or 6 in dependency of claim 1, wherein the ciphering algorithm is a symmetrical algorithm, preferably of AES type.

8. The method of claim 7, wherein the intermediary state (ISTATE) corresponds to a state provided by the algorithm between the fourth and ninth iterations.

9. A method for recording data in a memory, wherein the data are submitted to the ciphering algorithm and to a signature calculation according to the method of any of claims 1 to 8.

10. A method for reading data stored in a memory according to the method of claim 8, wherein the ciphered data are submitted to the deciphering algorithm, an intermediary state being sampled during the deciphering to verify the signature.

11. An electronic system comprising a processing unit (1) and a memory (2) external to this processing unit in which data must be stored in ciphered form, comprising means for implementing the method of any one of the proceeding claims.
